# EUROPEAN PATENT APPLICATION

(11) **EP 4 535 733 A1**
(43) Date of publication of application: **09.04.2025**
(21) Application number: 23842002.0
(22) Date of filing: 21.06.2023
(51) Int. Cl.: H04L 25/02

(54) **METHOD FOR DETERMINING CHANNEL STATE INFORMATION, ELECTRONIC DEVICE, AND STORAGE MEDIUM**

(30) Priority: 18.07.2022 CN 202210843620
(71) Applicant: ZTE Corporation, Shenzhen, Guangdong 518057 (CN)
(72) Inventor: LU, Zhaohua, Shenzhen, Guangdong 518057 (CN); XIAO, Huahua, Shenzhen, Guangdong 518057 (CN); LIU, Kun, Shenzhen, Guangdong 518057 (CN); WANG, Yuxin, Shenzhen, Guangdong 518057 (CN)
(74) Representative: Aipex B.V.
(86) International application number: PCT/CN2023/101856
(87) International publication number: WO 2024/016936

(57) **Abstract**

Provided are a method for determining channel state information, an electronic device, and a storage medium. The method includes acquiring M pieces of channel information according to N pieces of channel information; determining channel state information corresponding to the M pieces of channel information; and feeding back the channel state information corresponding to the M pieces of channel information. Here N is an integer greater than 1, and M is an integer greater than or equal to 1.

## Description

This application claims priority to Chinese Patent Application No. 202210843620.6 filed with the China National Intellectual Property Administration (CNIPA) on Jul. 18, 2022, the disclosure of which is incorporated herein by reference in its entirety.

### TECHNICAL FIELD

The present application relates to the field of wireless communications, particularly a method for determining channel state information, an electronic device, and a storage medium.

### BACKGROUND

With the recent development of wireless communication technology, there is widespread consensus on introducing artificial intelligence (AI) into wireless communication systems. One of the primary applications of AI in wireless communication systems is the prediction of channel state information (CSI). Due to powerful feature extraction capabilities of AI, AI can extract features from historical channel information, enabling the prediction of future channel information based on these extracted features. For example, in CSI feedback, at a reference slot n, channel information for M slots later than the reference slot n is predicted based on channel information for N slots earlier than the reference slot n. Of course, it is also possible to predict channel information for future M slots from channel information for N slots by using non-AI methods. The M pieces of channel information are then processed into channel state information. However, how to process the M pieces of channel information into channel state information and feed back the channel state information still requires further research.

### SUMMARY

This embodiment of the present application provides a method for determining channel state information, an electronic device, and a storage medium to enable the determination of predicted channel state information for channel information, thereby improving the channel transmission quality and enhancing the user experience.

An embodiment of the present application provides a method for determining channel state information.

The method includes acquiring M pieces of channel information according to N pieces of channel information; determining channel state information corresponding to the M pieces of channel information; and feeding back the channel state information corresponding to the M pieces of channel information. Here N is an integer greater than 1, and M is an integer greater than or equal to 1.

An embodiment of the present application provides a method for determining channel state information.

The method includes acquiring channel state information; and determining M pieces of channel information corresponding to the channel state information or determining channel state information corresponding to M pieces of channel information. Here the M pieces of channel information are acquired according to N pieces of channel information, N is an integer greater than 1, and M is an integer greater than or equal to 1.

An embodiment of the present application provides an electronic device.

The electronic device includes one or more processors and a memory. The memory is configured to store one or more programs which, when executed by the one or more processors, cause the one or more processors to perform the method of any embodiment of the present application.

An embodiment of the present application provides a computer-readable storage medium storing a computer program which, when executed by a processor, causes the processor to perform the method of any embodiment of the present application.

### BRIEF DESCRIPTION OF DRAWINGS

FIG. 1 is an example diagram illustrating prediction of channel state information according to an embodiment of the present application.
FIG. 2 is a flowchart of a method for determining channel state information according to an embodiment of the present application.
FIG. 3 is a flowchart of a method for determining channel state information according to an embodiment of the present application.
FIG. 4 is a flowchart of a method for determining channel state information according to an embodiment of the present application.
FIG. 5 is a flowchart of a method for determining channel state information according to an embodiment of the present application.
FIG. 6 is a flowchart of a method for determining channel state information according to an embodiment of the present application.
FIG. 7 is a flowchart of a method for determining channel state information according to an embodiment of the present application.
FIG. 8 is a flowchart of a method for determining channel state information according to an embodiment of the present application.
FIG. 9 is an example diagram illustrating encoding of channel state information on time-domain resources according to an embodiment of the present application.
FIG. 10 is an example diagram illustrating encoding of channel state information on frequency-domain resources according to an embodiment of the present application.
FIG. 11 is an example diagram illustrating encoding of channel state information on time-frequency-domain resources according to an embodiment of the present application.
FIG. 12 is a diagram illustrating the structure of an apparatus for determining channel state information according to an embodiment of the present application.
FIG. 13 is a diagram illustrating the structure of an apparatus for determining channel state information according to an embodiment of the present application.
FIG. 14 is a block diagram of an electronic device according to an embodiment of the present application.

### DETAILED DESCRIPTION

It is to be understood that the embodiments described herein are intended to explain the present application, not to limit the present application.

In the subsequent description, words for representing elements, such as "module", "component" and "unit" are merely used for facilitating the description of the present application and have no particular meanings in themselves. Therefore, "module", "component" and "unit" may be used in a mixed manner.

In embodiments of the present application, the network architecture of a mobile communication network (including, but not limited to, 3rd-Generation (3G), 4th generation mobile communication technology (4G), 5th-Generation (5G), and future mobile communication networks) may include network devices (for example, base stations) and receiving devices (for example, terminals). It is to be understood that in this example, in the downlink, the first communication node (which may also be referred to as the first communication node device) may be a base-station-side device, and the second communication node (which may also be referred to as the second communication node device) may be a terminal-side device. Of course, in the uplink, the first communication node may also be a terminal-side device, and the second communication node may also be a base-station-side device. In device-to-device communication between two communication nodes, both the first communication node and the second communication node may be either a base station or a terminal.

In the present application, the base station may be a base station or evolved Node B (eNB or eNodeB) in long-term evolution (LTE) or long-term evolution advanced (LTE-A), a base station device in a 5G network, or a base station in a future communication system. The base station may be a network device such as a macro base station, a micro base station, a home base station, a remote radio head, a Reconfigurable Intelligent Surface (RIS), a router, a Wireless Fidelity (Wi-Fi) device, or a primary cell and a secondary cell.

In the present application, the terminal is a device with wireless transceiving capabilities that can be deployed on land, including indoor or outdoor, handheld, wearable, or vehicle-mounted. The terminal may also be deployed on water (such as on a ship). The terminal may even be deployed in the air (such as on an airplane, balloon, or satellite). The terminal may be a mobile phone, a tablet, a computer with wireless transceiving capabilities, a virtual reality (VR) terminal, an augmented reality (AR) terminal, a wireless terminal in industrial control, a wireless terminal in self-driving vehicles, a wireless terminal in remote medical care, a wireless terminal in a smart grid, a wireless terminal in transportation safety, a wireless terminal in a smart city, or a wireless terminal in a smart home. Embodiments of the present application do not limit the application scenarios. The terminal may sometimes also be referred to as a user, user equipment (UE), access terminal, UE unit, UE station, mobile station, mobile terminal, remote station, remote terminal, mobile device, UE terminal, wireless communication device, UE proxy, or UE apparatus. Embodiments of the present application do not impose any limitation on these terms.

In the present application, higher-layer signaling includes, but is not limited to, Radio Resource Control (RRC) and Media Access Control Control Element (MAC CE); and physical-layer signaling may also be transmitted between the base station and the terminal. For example, physical-layer signaling is transmitted on a physical downlink control channel (PDCCH) or a physical uplink control channel (PUCCH).

In the present application, the term "indicator" for various parameters may also be referred to as "index" or "identifier (ID)", and these concepts are fully equivalent. For example, in terms of a resource identifier in a wireless system, the wireless system resource includes, but is not limited to, any of the following: a reference signal resource, a reference signal resource group, reference signal resource configuration, a channel state information (CSI) report, a CSI report set, a terminal, a base station, a panel, a neural network, a subneural network, or a neural network layer. Each of these elements has a corresponding index. The base station may indicate the identifier of one resource or the identifier of one resource set to the terminal through various higher-layer signaling or physical-layer signaling.

In some embodiments, artificial intelligence (AI) includes self-learning devices, components, software, and modules that encompass machine learning (ML), deep learning, reinforcement learning, transfer learning, and deep reinforcement learning, meta-learning. In certain embodiments, AI is implemented through an artificial intelligence network (or also referred to as a neural network), which includes multiple layers, with each layer consisting of at least one node. In an example, the neural network includes an input layer, an output layer, and at least one hidden layer. Here each layer of the neural network may incorporate, but is not limited to, at least one of the following: a fully connected layer, a dense layer, a convolutional layer, a transposed convolutional layer, a residual connection, an activation function, a normalization layer, or a pooling layer. In some embodiments, each layer of the neural network may include a subneural network, such as a ResNet block, DenseNet block, or recurrent neural network (RNN) block. The AI network includes the neural network model and/or the neural network parameters corresponding to the neural network model. The neural network model may be referred to as the network model. The neural network parameters may be referred to as network parameters. A network model defines the number of layers in the neural network, the size of each layer, the activation function, the connections, the convolutional kernels, and the convolutional stride size, as well as the type of convolution (for example, 1D convolution, 2D convolution, 3D convolution, atrous convolution, transposed convolution, separable convolution, grouped convolution, dilated convolution) used in the network architecture. The network parameters are the weights and/or biases of layers in the network model and their respective values. A single network model may correspond to multiple different sets of neural network parameter values to adapt to various scenarios. A single neural network model may correspond to multiple different neural network parameter values, and the parameters of the neural network may be obtained through online or offline training. For instance, by inputting at least one sample and label, the neural network model may be trained to obtain the neural network parameters.

In some embodiments, a slot may be a slot or a mini-slot. The slot or mini-slot includes at least one symbol. Here the symbol refers to a time unit within a subframe, frame, or slot. The symbol may be, for example, an orthogonal frequency division multiplexing (OFDM) symbol, a single-carrier frequency division multiple access (SC-FDMA) symbol, or an orthogonal frequency division multiple access (OFDMA) symbol.

In some embodiments, transmission includes sending or receiving, for example, sending data or signals or receiving data or signals.

In some embodiments, to calculate channel state information or perform channel estimation, mobility management, or positioning, it is necessary for the base station or user to send a reference signal (RS). Reference signals include, but are not limited to, channel state information-reference signals (CSI-RS) (including zero power CSI-RS (ZP CSI-RS) and non-zero power CSI-RS (NZP CSI-RS)), channel state information-interference measurement (CSI-IM), sounding reference signals (SRS), synchronization signals block (SSB), physical broadcast channel (PBCH), and SSB/PBCH. NZP CSI-RS can be used for channel or interference measurement. CSI-RS can also be used for tracking, referred to as tracking reference signal (CSI-RS for Tracking, TRS). CSI-IM is generally used for interference measurement. SRS is used for channel estimation. Additionally, the time-frequency resources for transmitting reference signals include resource element (RE) sets, referred to as reference signal resources, such as CSI-RS resources, SRS resources, CSI-IM resources, and SSB resources. In this context, SSB includes a synchronization signal block and/or a physical broadcast channel.

In some embodiments, in a communication system, resources for transmitting reference signals can be referred to as reference signal resources. To reduce signaling overhead and for other reasons, multiple reference signal resources may be divided into several sets (such as CSI-RS resource set, CSI-IM resource set, SRS resource set). A reference signal resource set includes at least one reference signal resource. Multiple reference signal resource sets may all be derived from the same reference signal resource configuration (such as CSI-RS resource setting, SRS resource setting, or CSI-RS resource setting, where CSI-RS resource setting may include CSI-IM resource setting and is collectively referred to as CSI-RS resource setting) for configuration of parameter information.

In some embodiments, the base station configures measurement resource information. The measurement resource information is used for acquisition of channel state information. The measurement resource information includes CN channel measurement resource (CMR) information and CM interference measurement resource (IMR) information. Here CN and CM are each a positive integer. The base station configures the measurement resource information in a report configuration or reporting setting.

In some examples, to better transmit data or signals, the base station or terminal needs to obtain channel state information. The channel state information may include at least one of the following: channel state information-reference signal resource indicator (CSI-RS resource indicator, CRI), synchronization signals block resource indicator (Synchronization Signals Block Resource Indicator, SSBRI), reference signal received power (RSRP), differential RSRP, channel quality indicator (CQI), precoding matrix indicator (PMI), layer indicator (LI), rank indicator (RI), level 1 signal to interference plus noise ratio (L1-SINR), or differential L1-SINR. The precoding matrix indicator is a type of precoding information, specifically the case where precoding information is performed based on a codebook, for example, including the first-type precoding information. The precoding information also includes a non-codebook-based method, for example, the second-type precoding information. In an example, CSI that includes only the first-type precoding information is referred to as first-type CSI, while CSI that includes the second-type precoding information is referred to as second-type CSI.

In some embodiments, the terminal and the base station use the first-type precoding information to transmit channel state information that matches the channel. The first-type precoding information is precoding information based on traditional channel characteristic matrices or quantized values of these matrices; for example, a codebook-based method, for example, an N-antenna codebook (N = 2, 4, 8, 12, 16, 24, 32) in LTE, or a type I codebook, type II codebook, type II port selection codebook, enhanced type II codebook, enhanced type II selection codebook, or further enhanced type II selection codebook in NR. Here the codebook includes L codewords. The main idea is that the base station and terminal prestore L codewords according to a specified formula, table, or dictionary. In some examples, a codeword is a vector. In other examples, a codeword is a matrix with r columns, each column being a vector. Preferably, columns of the matrix are orthogonal to each other. In some examples, the vectors that constitute the codewords are 0-1 vectors, where the entire vector has only one value of 1, with all other values being zero. In some examples, the vectors that constitute the codewords are discrete Fourier transform (DFT) vectors. In some examples, the vectors constituting codewords are obtained by taking the tensor product (Kronecker product) of two or more DFT vectors. In other examples, the vectors constituting codewords are obtained by multiplying two or more DFT vectors with different phase rotations. In yet other examples, the vectors constituting codewords are obtained by combining both the tensor product (Kronecker product) and phase rotations of two or more DFT vectors. The base station or terminal finds the codeword that best matches the channel by searching among L codewords, using the most suitable codeword to transmit data or signals. Here, a codeword that matches the channel includes, but is not limited to, at least one of the following: the codeword closest to the channel, the codeword with the highest correlation with the channel, the codeword closest to the optimal right singular vector or matrix of the channel, the codeword with the highest correlation with the optimal right singular vector or matrix of the channel, or the codeword that maximizes the signal-to-noise ratio computed for the channel. L is an integer greater than 1, generally greater than the number of transmitting antennas.

In some examples, the terminal and base station transmit channel state information that matches the channel by using the second-type precoding information. The second-type precoding information is based on AI-generated channel state information. In an example, the terminal and base station obtain channel state information by using an autoencoder, which includes an encoder and a decoder, where the encoder is located at the terminal and the decoder is at the base station. The terminal compresses the obtained channel H by using the encoder to get compressed channel state information H1, and then quantizes and feeds back the compressed channel state information H1 to the base station. The base station receives the quantized H1, dequantizes H1, and inputs H1 into the decoder. The decoder decompresses H1 to recover H1. In an example, H contains K0 elements, the terminal selects K elements from H to serve as H1, quantizes H1 for feedback, and the base station receives the K quantized elements, dequantizes the K quantized elements, and inputs the dequantized K elements into the AI module. The AI module outputs K0 elements to recover H1 to obtain the precoding matrix for H1. Here K and K0 are integers greater than 1, with K < K0. The compressed H1 or the K elements selected from H are considered as second-type channel state information. For simplicity, the quantized H1 is also referred to as second-type channel state information. In an example, the second-type precoding information may also be a precoding matrix that is generated by other non-AI methods and that differs from the first-type precoding information. In an example, the second-type precoding information may be a precoding matrix distinct from the first-type precoding information.

In some examples, to transmit CSI, such as when the terminal feeds back CSI and the base station receives CSI, the terminal and base station need to define a CSI report (CSI report or CSI report config). The CSI report defines at least one of the following parameters: the time and frequency resources used for CSI feedback, the report quantity included in CSI, the time-domain category for CSI feedback (reportConfigType), channel measurement resources, interference measurement resources, or the size of the measurement bandwidth. The CSI report can be transmitted over uplink transmission resources. The uplink transmission resources are resources used for transmitting uplink signaling or data, including, but not limited to, the physical uplink shared channel (PUSCH) and the physical uplink control channel (PUCCH). CSI reports also include time-domain characteristics, including periodic CSI reports (P-CSI), aperiodic CSI reports (A-CSI), and semi-persistent CSI reports (SP-CSI). Generally, P-CSI involves a relatively small number of bits and is transmitted on PUCCH, while A-CSI involves a larger number of bits and is usually transmitted on PUSCH. SP-CSI can be transmitted on PUSCH or PUCCH. Typically, P-CSI transmitted on PUCCH is configured by higher-layer signaling (radio resource control (RRC)), and SP-CSI transmitted on PUCCH is also configured or activated by higher-layer signaling (RRC and/or MAC CE). In contrast, SP-CSI or A-CSI transmitted on PUSCH is triggered by physical layer signaling (downlink control information (DCI)) that is usually transmitted on the physical downlink control channel (PDCCH).

In some embodiments, feeding back can also be replaced with "sending" or "transmitting", all of which refer to transmitting signaling, data, or channel state information from one communication node to another communication node.

In some embodiments, the base station configures the terminal with N CSI reports (CSI report) that need to be fed back to the base station through higher-layer signaling and/or physical-layer signaling. Each CSI report has an identity (ID), referred to as CSI reportID. The terminal may select M out of the N CSI reports based on its own computational or processing capabilities as well as the requirements of the base station and then feed back at least one of these M CSI reports based on the available uplink resources. Here N and M are positive integers, and M ≤ N. In an example, when M CSI reports need to be fed back, but at least two of these reports have conflicting feedback resources, the conflict in feedback resources refers to that among the transmission resources (such as PUCCH or PUSCH) for feeding back the two reports, at least one symbol among the transmission resources for feeding back one of the two reports is the same as at least one symbol among the transmission resources for feeding back the other of the two reports, and/or at least one subcarrier among the transmission resources for feeding back one of the two reports is the same as at least one subcarrier among the transmission resources for feeding back the other of the two reports.

In some examples, the terminal needs to feed back multiple CSI reports. Here the transmission resources corresponding to at least L of these CSI reports are in conflict. In one example, at least one of the L conflicting CSI reports includes the second-type precoding information. Here L is a positive integer. The priority values (PVs) of the L conflicting CSI reports are calculated according to a priority calculation formula. The reports are sorted in ascending order based on their priority values. At least one CSI report with a lower priority is selected for transmission on the uplink transmission resources.

In some embodiments, the antenna may be a physical antenna. In some examples, the antenna may be a logical antenna. In some examples, the concepts of port and antenna can be interchangeable. In some examples, the antenna is a transmitting antenna. In some examples, the antenna is a receiving antenna. In some examples, the antenna includes a pair of transmitting and receiving antennas. In some examples, the antenna may be a uniform linear array. In some examples, the antenna is a uniform planar array (for example, including Ng rows and Mg columns, where Ng and Mg are positive integers). In some examples, the antenna is a uniform circular array. In some examples, the antenna may be a nonuniform linear array. In some examples, the antenna is a nonuniform planar array. In some examples, the antenna is a nonuniform circular array. In some examples, the antenna is a directional antenna. In some examples, the antenna is an omnidirectional antenna. In some examples, the antenna is a dual-polarized antenna. In some examples, the antenna is a single-polarized antenna.

In some examples, the channel information is information obtained based on a reference signal (such as CSI-RS) to describe the channel environment between communication nodes, such as a time-domain channel matrix or a frequency-domain channel matrix. In some examples, the channel information is a complex matrix related to the number of transmitting antennas Nt, the number of receiving antennas Nr, and resource elements (RE). For example, at least one Nr*Nt channel matrix is present on a physical resource block (PRB). The base station transmits, over N slots, the reference signal for channel measurement. The terminal measures the reference signal transmitted in at least one of the N slots to perform channel measurement. Based on the received reference signal transmitted over the N slots to perform channel measurement, the corresponding channel information Hi for each slot is obtained, where i = 1, ..., and N. Here the N slots are the slots earlier than the reference slot. In some embodiments, the reference slot includes one of the following: an agreed-upon slot between the base station and the terminal; a current slot; a slot indicated by the base station; a slot obtained by adding a fixed offset to a slot indicated by the base station; or a slot obtained by adding a fixed offset to the slot in which the terminal receives indication signaling of the base station. Here the current slot is used for the operation of obtaining M channel information from the N channel information.

In some examples, M pieces of channel information are obtained based on N pieces of channel information. For instance, the N pieces of channel information are sequentially encoded and then input into the first AI module, which outputs M pieces of channel information. In some examples, encoding the channel information includes, but is not limited to, one of the following: normalizing the elements of the channel matrix (for example, normalizing the range of an element to the interval [0, 1] or [-0.5, 0.5]), converting the elements of the channel matrix into real numbers (for example, splitting a complex number into its real and imaginary parts), sampling the channel matrix, grouping the channel matrix, or performing joint operations on multiple channel matrices. Here the N pieces of channel information are the channel information earlier than the reference slot, and the M pieces of channel information are the channel information later than the reference slot. Here N is an integer greater than 1, and M is an integer greater than or equal to 1.

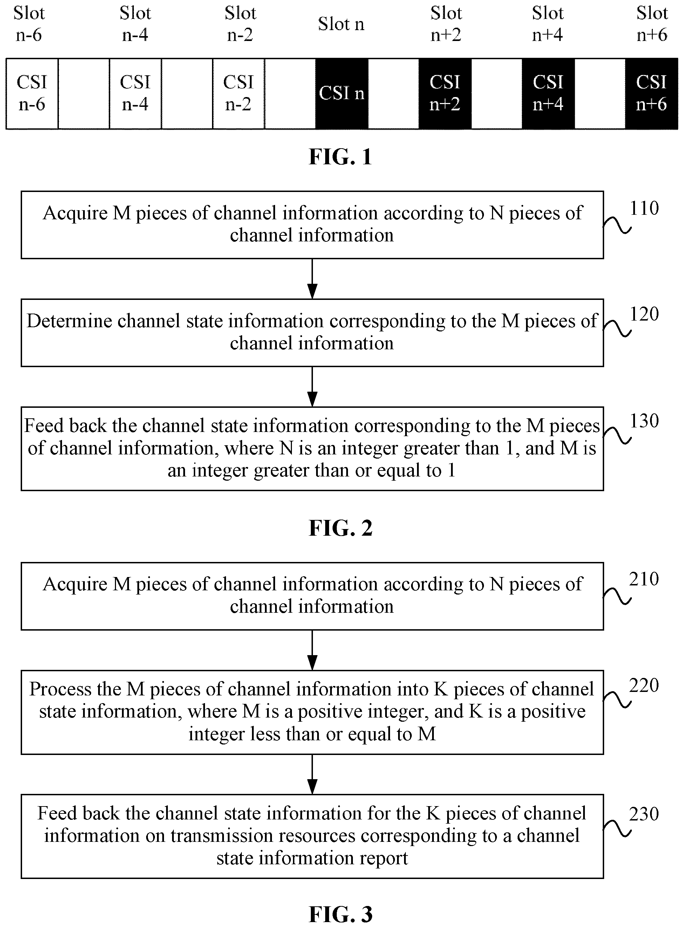

In some examples, referring to FIG. 1, the channel state information (CSI) corresponding to the M pieces of channel information is determined. In an example, the M pieces of channel information are encoded and then input into a second AI module, and the second AI module outputs a single piece of CSI. In another example, the M pieces of channel information are encoded and then input into the second AI module separately, and the second AI module outputs M pieces of CSI. In an example, the M pieces of channel information are divided into K groups, each group of channel information is encoded and then separately input into the second AI module, and the second AI module outputs K pieces of CSI. In another example, the M pieces of channel information are divided into K groups, the ith piece of channel information is encoded and then input into the second AI module, and the second AI module outputs i pieces of CSI. Here i = 1, ..., and K, M is an integer greater than or equal to 1, K is an integer greater than or equal to 1, and K < M.

In some examples, the channel state information (CSI) corresponding to the M pieces of channel information is fed back. For instance, the CSI is transmitted using uplink transmission resources. In some examples, the CSI corresponding to the M pieces of channel information is carried on at least one aperiodic PUSCH for transmission. In some examples, the CSI corresponding to the M pieces of channel information is carried on at least one semi-persistent PUSCH for transmission. In some examples, the CSI corresponding to the M pieces of channel information is carried on at least one periodic PUCCH for transmission. In some embodiments, feeding back one piece of channel state information means transmitting the CSI by carrying it on an uplink transmission resource. In some embodiments, feeding back at least one piece of channel state information through a CSI report means that the at least one piece of channel state information is carried on the uplink transmission resource indicated by the CSI report and transmitted to another communication node through the uplink transmission resource.

FIG. 2 is a flowchart of a method for determining channel state information according to an embodiment of the present application. This embodiment of the present application may be applicable for determining channel state information. The channel information corresponding to the channel state information is predicted and generated based on historical channel information or channel information earlier than the reference slot. The method may be performed by the apparatus for determining channel state information according to any embodiment of the present application. The apparatus may be implemented by software and/or hardware. The apparatus is generally integrated in a terminal. Referring to FIG. 2, the method of this embodiment of the present application includes 110, 120, and 130.

In 110, M pieces of channel information are acquired according to N pieces of channel information.

In this embodiment of the present application, the M pieces of channel information may be acquired according to the N pieces of channel information. The acquisition may be as follows: predicting the N pieces of channel information to determine the M pieces of channel information by using an artificial intelligence method. Of course, in the present application, the M pieces of channel information may also be acquired from the N pieces of channel information by using a non-AI method. For example, the N pieces of channel information may be sequentially encoded and input into a first AI module, and then the first AI module outputs M pieces of channel information.

In 120, channel state information corresponding to the M pieces of channel information is determined.

In some examples, the channel state information (CSI) corresponding to the M pieces of channel information may be determined by using AI. In an example, the M pieces of channel information are encoded and then input into the second AI module, and the second AI module outputs a single piece of CSI. In another example, the M pieces of channel information are encoded and then input into the second AI module separately, and the second AI module outputs M pieces of CSI. In an example, the M pieces of channel information are divided into K groups, each group of channel information is encoded and then separately input into the second AI module, and the second AI module outputs K pieces of CSI. In another example, the M pieces of channel information are divided into K groups, the ith piece of channel information is encoded and then input into the second AI module, and the second AI module outputs i pieces of CSI. Here i = 1, ..., and K, M is an integer greater than or equal to 1, K is an integer greater than or equal to 1, and K < M.

In 130, the channel state information corresponding to the M pieces of channel information is fed back, where N is an integer greater than 1, and M is an integer greater than or equal to 1.

In this embodiment of the present application, after the channel state information is determined, the channel state information corresponding to the M channel information is fed back.

In some embodiments, the N pieces of channel information are channel information earlier than a reference slot, and the M pieces of channel information are channel information later than the reference slot.

In this embodiment of the present application, one or more pieces of channel information later than the reference slot may be determined according to one or more pieces of channel information earlier than the reference slot.

FIG. 3 is a flowchart of a method for determining channel state information according to an embodiment of the present application. This embodiment of the present application is based on the previous embodiments of the present application. Referring to FIG. 3, the method of this embodiment of the present application includes 210, 220, and 230.

In 210, M pieces of channel information are acquired according to N pieces of channel information.

In 220, the M pieces of channel information are processed into K pieces of channel state information, where M is a positive integer, and K is a positive integer less than or equal to M.

In this embodiment of the present application, the M pieces of channel information may be processed into K pieces of state information. This processing may include mapping the channel information into a precoding matrix, that is, converting the channel information into first-type or second-type precoding information, or describing the channel information by using first-type or second-type precoding information. Here, K is a positive integer less than or equal to M.

In 230, the channel state information for the K pieces of channel information is fed back on transmission resources corresponding to a channel state information report.

For example, the generated channel state information corresponding to the K pieces of channel information may be fed back in a channel state information report. For instance, the channel state information report indicates uplink transmission resources, and the channel state information corresponding to the K pieces of channel information is transmitted over these uplink transmission resources.

In some embodiments, the first indication information may be one of the following: physical-layer signaling, a field in physical-layer signaling, higher-layer signaling, a field in higher-layer signaling, or a field carried in a CSI report. The first indication information indicates the type of the channel state information. In an example, the channel state information report includes the first indication information.

In this embodiment of the present application, the first indication information is fed back. The first indication information is configured to indicate the channel state information type.

For example, the first indication information may be configured to indicate the type of the channel state information (CSI) corresponding to a CSI group. The type of the CSI includes first-type precoding information and second-type precoding information. The type of the CSI can be used to indicate the type of the CSI corresponding to the CSI group. For instance, the first indication information can indicate the type of the CSI corresponding to the CSI group. When the first indication information has a first value, the terminal and/or base station uses the first-type precoding information to describe channel information in the channel information group, for example, determine the channel information within the channel information group as the first-type precoding information. When the first indication information has a second value, the terminal and/or base station uses the second-type precoding information to describe channel information in the channel information group, for example, determine the channel information in the channel information group as the second-type precoding information. In an example embodiment, the first value may be 0 and the second value may be 1; or the first value may be 0 and the second value may be a non-zero value; or the first value may be FALSE and the second value may be TRUE. Of course, the first and second values here may also be other real values as long as they can be used to differentiate between two cases. In an example embodiment, the terminal feeds back the first indication information. Here the first indication information has the first value. The terminal determines the channel information in the channel information group as the first-type precoding information and feeds back the first-type precoding information. The base station receives the first indication information and the first-type precoding information. In an example embodiment, the terminal feeds back the first indication information. Here the first indication information includes at least one bit. The first indication information for describing the channel state information has the second value. The terminal determines the channel information in the channel information group as the second-type precoding information and feeds back the second-type precoding information. The base station receives the first indication information for describing the channel state information and receives the second-type precoding information.

In some embodiments, feeding back the channel state information for the K pieces of channel information includes transmitting the channel state information for the K pieces of channel information on transmission resources corresponding to K channel state information reports.

In this embodiment of the present application, the channel state information for the K pieces of channel information may be transmitted on transmission resources corresponding to K channel state information reports. The channel state information for the K pieces of channel information may be transmitted in the first or multiple slots on transmission resources corresponding to the K channel state information reports.

In some embodiments, the K channel state information reports have the same report identifier information.

For example, the K channel state information reports for feedback of the K pieces of channel information may have the same report identifier information, for example, the same report number (ReportID).

In some other embodiments, the K channel state information reports have different report identifier information.

In this embodiment of the present application, the K channel state information reports for feedback of the K pieces of channel information may have different report identifier information, for example, may have different report numbers (ReportIDs).

In some embodiments, the K channel state information reports are in one slot.

In some other embodiments, the K channel state information reports are in K0 slots. K0 is an integer less than or equal to K and greater than 1.

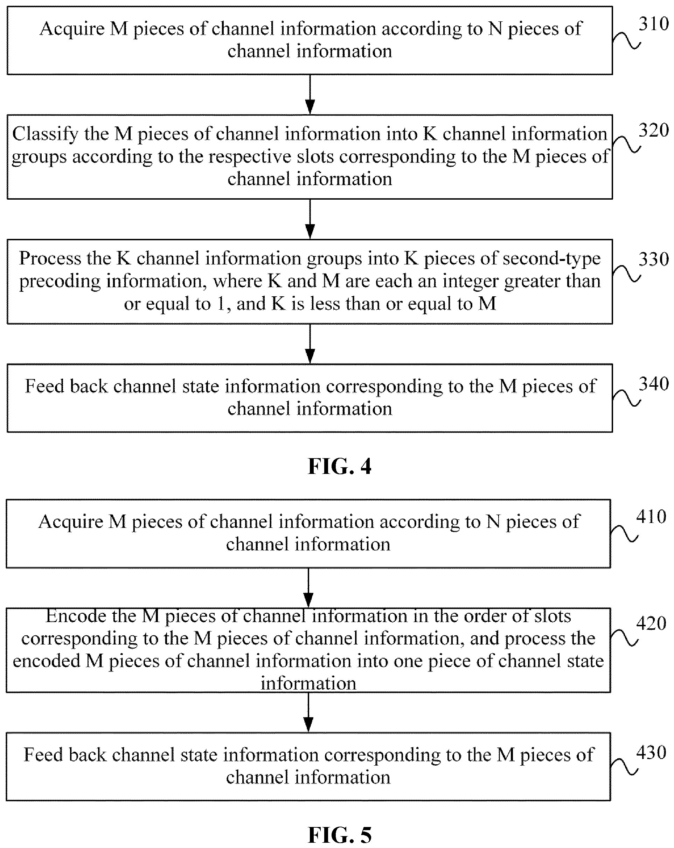

FIG. 4 is a flowchart of a method for determining channel state information according to an embodiment of the present application. Referring to FIG. 4, this embodiment of the present application is based on the previous embodiments of the present application. The method for determining channel state information according to this embodiment of the present application includes 310, 320, 330, and 340.

In 310, M pieces of channel information are acquired according to N pieces of channel information.

In 320, the M pieces of channel information are classified into K channel information groups according to the respective slots corresponding to the M pieces of channel information.

In this embodiment of the present application, the M pieces of channel information may be classified into K channel information groups according to the respective slots corresponding to the M pieces of channel information. Here each channel information group includes one or more pieces of channel information.

In 330, the K channel information groups are processed into K pieces of second-type precoding information. Here K and M are each an integer greater than or equal to 1, and K is less than or equal to M.

In this embodiment of the present application, the K channel information groups may be processed into K pieces of second-type precoding information. For example, the ith group may be processed into the ith piece of channel state information. This processing may be performed based on AI. Here i is an integer of 1, ..., K.

In 340, channel state information corresponding to the M pieces of channel information is fed back.

In some embodiments, the ith channel information group among the K channel information groups includes Xᵢ pieces of channel information. Here Xᵢ is a positive integer, and i = 1, ..., K.

In this embodiment of the present application, among the K channel information groups, each channel information group includes at least one piece of channel information. In an embodiment, in terms of the number of pieces of channel information included in each channel information group, one of the following applies: The first channel information group includes X1 pieces of channel information, and the second channel information group includes X2 pieces of channel information, where X1 and X2 are each a positive integer; the first channel information group includes X1 pieces of channel information, the second channel information group includes X2 pieces of channel information, and the third channel information group includes X3 pieces of channel information, where X1, X2, and X3 are each a positive integer; or the first channel information group includes X1 pieces of channel information, the second channel information group includes X2 pieces of channel information, the third channel information group includes X3 pieces of channel information, and the fourth channel information group includes X4 pieces of channel information, where X1, X2, X3, and X4 are each a positive integer.

In some embodiments, the channel information group includes channel information in at least one of the following manners: The first channel information group includes 1 piece of channel information, and the second channel information group includes 2 pieces of channel information; the first channel information group includes 2 pieces of channel information, and the second channel information group includes 1 piece of channel information; the first channel information group includes 2 pieces of channel information, and the second channel information group includes 2 pieces of channel information; the first channel information group includes 1 piece of channel information, and the second channel information group includes 3 pieces of channel information; the first channel information group includes 3 pieces of channel information, and the second channel information group includes 1 piece of channel information; the first channel information group includes 2 pieces of channel information, and the second channel information group includes 3 pieces of channel information; the first channel information group includes 3 pieces of channel information, and the second channel information group includes 2 pieces of channel information; the first channel information group includes 3 pieces of channel information, and the second channel information group includes 3 pieces of channel information; the first channel information group includes 1 piece of channel information, and the second channel information group includes 4 pieces of channel information; the first channel information group includes 4 pieces of channel information, and the second channel information group includes 1 piece of channel information; the first channel information group includes 2 pieces of channel information, and the second channel information group includes 4 pieces of channel information; the first channel information group includes 4 pieces of channel information, and the second channel information group includes 2 pieces of channel information; the first channel information group includes 3 pieces of channel information, and the second channel information group includes 4 pieces of channel information; the first channel information group includes 4 pieces of channel information, and the second channel information group includes 3 pieces of channel information; the first channel information group includes 4 pieces of channel information, and the second channel information group includes 4 pieces of channel information; the first channel information group includes 1 piece of channel information, the second channel information group includes 2 pieces of channel information, and the third channel information group includes 2 pieces of channel information; or the first channel information group includes 2 pieces of channel information, the second channel information group includes 2 pieces of channel information, and the third channel information group includes 1 piece of channel information.

In some embodiments, in the case where the channel information group includes only one piece of channel information and the first indication information has a first value, the one piece of channel information is processed into first-type precoding information; or in the case where the channel information group includes at least two pieces of channel information and the first indication information has a first value, the at least two pieces of channel information are processed into at least one piece of first-type precoding information.

In an embodiment of the present application, when the channel information group includes only one piece of channel information and the first indication information has a first value, the one piece of channel information included in the channel information group may be processed into the first-type precoding information. This processing may be based on a DFT-related codebook method, such as TypeII or eTypeII, to describe the channel information. In an embodiment of the present application, when the channel information group includes at least two pieces of channel information and the first indication information has a first value, at least one piece of channel information included in the channel information group may be processed into the first-type precoding information. This processing of each piece of channel information may be based on a DFT-related codebook method, such as TypeII or eTypeII, to describe the channel information.

In an embodiment, based on the previous embodiments of the present application, also included is feeding back first indication information. The first indication information is configured to describe or indicate the type of the channel state information.

FIG. 5 is a flowchart of a method for determining channel state information according to an embodiment of the present application. Referring to FIG. 5, this embodiment of the present application is based on the previous embodiments of the present application. The method for determining channel state information according to this embodiment of the present application includes 410, 420, and 430.

In 410, M pieces of channel information are acquired according to N pieces of channel information.

In 420, the M pieces of channel information are encoded in the order of slots corresponding to the M pieces of channel information, and the encoded M pieces of channel information are processed into one piece of channel state information.

In this embodiment of the present application, the M pieces of channel information may be encoded in the order of their respective slots, with channel information in larger slots being encoded earlier. The M pieces of channel information may be encoded into a single piece of channel state information.

In 430, channel state information corresponding to the M pieces of channel information is fed back.

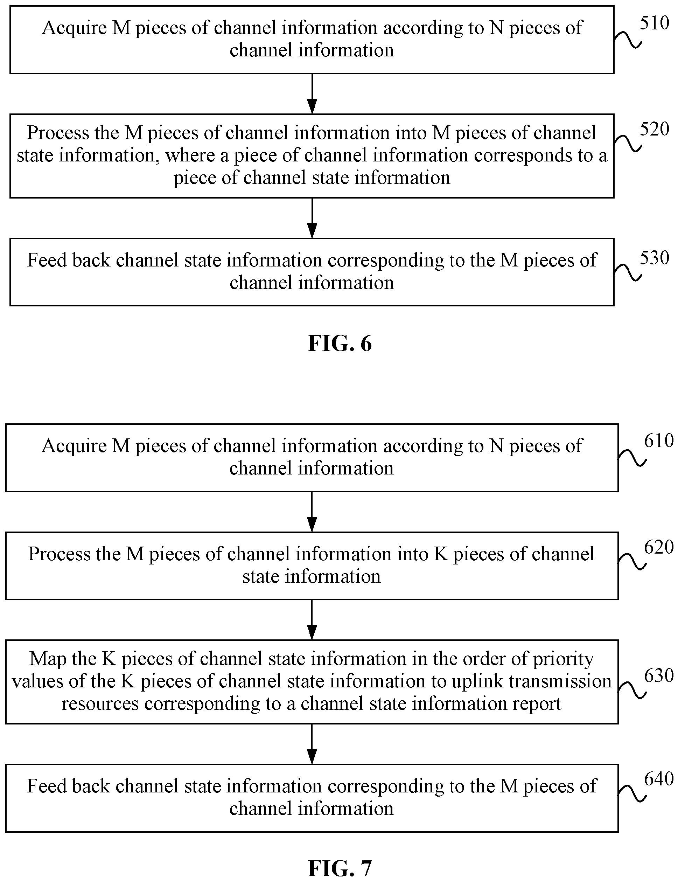

FIG. 6 is a flowchart of a method for determining channel state information according to an embodiment of the present application. Referring to FIG. 6, this embodiment of the present application is based on the previous embodiments of the present application. The method for determining channel state information according to this embodiment of the present application includes 510, 520, and 530.

In 510, M pieces of channel information are acquired according to N pieces of channel information.

In 520, the M pieces of channel information are processed into M pieces of channel state information. Here a piece of channel information corresponds to a piece of channel state information.

In this embodiment of the present application, the M pieces of channel information may be processed into M pieces of channel state information. Here each piece of channel information may be processed into a single piece of channel state information.

In 530, channel state information corresponding to the M pieces of channel information is fed back.

FIG. 7 is a flowchart of a method for determining channel state information according to an embodiment of the present application. Referring to FIG. 7, this embodiment of the present application is based on the previous embodiments of the present application. The method for determining channel state information according to this embodiment of the present application includes 610, 620, 630, and 640.

In 610, M pieces of channel information are acquired according to N pieces of channel information.

In 620, the M pieces of channel information are processed into K pieces of channel state information.

In 630, the K pieces of channel state information are mapped in the order of priority values of the K pieces of channel state information to uplink transmission resources corresponding to a channel state information report.

In this embodiment of the present application, the K pieces of channel state information may be mapped in the order of priority values of the K pieces of channel state information to the uplink transmission resources. The uplink transmission resources may correspond to one channel state information report.

In 640, channel state information corresponding to the M pieces of channel information is fed back.

In an embodiment, based on the previous embodiments of the present application, the priority values of the K pieces of channel state information are determined according to slots corresponding to the K pieces of channel state information, or the priority values of the K pieces of channel state information are determined according to indexes corresponding to the K pieces of channel state information.

In this embodiment of the present application, the priority values of the K pieces of channel state information are determined according to slots corresponding to the K pieces of channel state information; and among the K pieces of channel state information, the larger the corresponding slot, the greater the corresponding priority value. Alternatively, the priority values of the K pieces of channel state information are determined according to indexes corresponding to the K pieces of channel state information; and the larger the index, the smaller the corresponding priority value. For example, the priority value corresponding to the index of the ith piece of channel state information is less than the priority value corresponding to the index of the jth piece of channel state information. Here j < i, and i, j = 1, ..., K.

In some embodiments, mapping the K pieces of channel state information in the order of priority values of the K pieces of channel state information to the uplink transmission resources corresponding to the channel state information report includes one of the following: dividing the uplink transmission resources into K time-domain resource groups and mapping the kth piece of channel state information among the K pieces of channel state information to the kth time-domain resource group among the K time-domain resource groups; dividing the uplink transmission resources into K frequency-domain resource groups and mapping a kth piece of channel state information among the K pieces of channel state information to a kth frequency-domain resource group among the K frequency-domain resource groups; or dividing the uplink transmission resources into K time-frequency-domain resource groups and mapping a kth piece of channel state information among the K pieces of channel state information to a kth time-frequency-domain resource group among the K time-frequency-domain resource groups.

In this embodiment of the present application, the uplink transmission resources may include at least one of time-domain resources, frequency-domain resources, or time-frequency-domain resources. The uplink transmission resources may be divided into K groups. The K pieces of channel state information may be mapped to one group of uplink transmission resources separately. If the uplink transmission resources include time-domain resources, the K pieces of channel state information can be mapped to one of the K time-domain resource groups divided from the time-domain resources; and each time-domain resource group can include L1 time-domain symbol resources (for example, resource elements on different subcarriers on L1 consecutive or nonconsecutive symbols). If the uplink transmission resources include frequency-domain resources, the K pieces of channel state information can be mapped to one of the K frequency-domain resource groups divided from the frequency-domain resources; and each frequency-domain resource group can include L2 subcarrier resources, for example, one or more physical resource blocks (PRBs) or one or more subbands. If the uplink transmission resources include time-frequency-domain resources, the K pieces of channel state information can be mapped to one of the K time-frequency-domain resource groups divided from the time-frequency-domain resources; and each time-frequency-domain resource group can include L1 time-domain symbol resources and L2 subcarrier resources. Here K, L1, and L2 are positive integers.

In an embodiment, based on the previous embodiments of the present application, the method for determining channel state information also includes at least one of the following: the smaller a slot corresponding to the channel information, the smaller a slot corresponding to a transmission resource for channel state information corresponding to the channel information; the smaller a slot corresponding to the channel information, the smaller a slot corresponding to a transmission resource for the channel information; the smaller a slot corresponding to the channel information, the smaller a slot corresponding to a channel state information report corresponding to the channel information; the smaller a slot corresponding to the channel state information, the smaller a slot corresponding to a channel state information report corresponding to the channel state information; or the smaller a slot corresponding to the channel information, the smaller a slot corresponding to a transmission resource for the channel information.

That is, the earlier a piece of channel state information is determined, the earlier this piece of channel state information is transmitted. Here, "earlier" is reflected in the transmission slot, where a smaller slot number indicates earlier transmission.

In an embodiment, a first determination time of the channel state information corresponding to the M pieces of channel information is earlier than a second determination time of channel state information corresponding to the N pieces of channel information.

In this embodiment of the present application, a first determination time of the channel state information corresponding to the M pieces of channel information is earlier than a second determination time of channel state information corresponding to the N pieces of channel information. For example, the second determination time is an integer multiple of the first determination time.

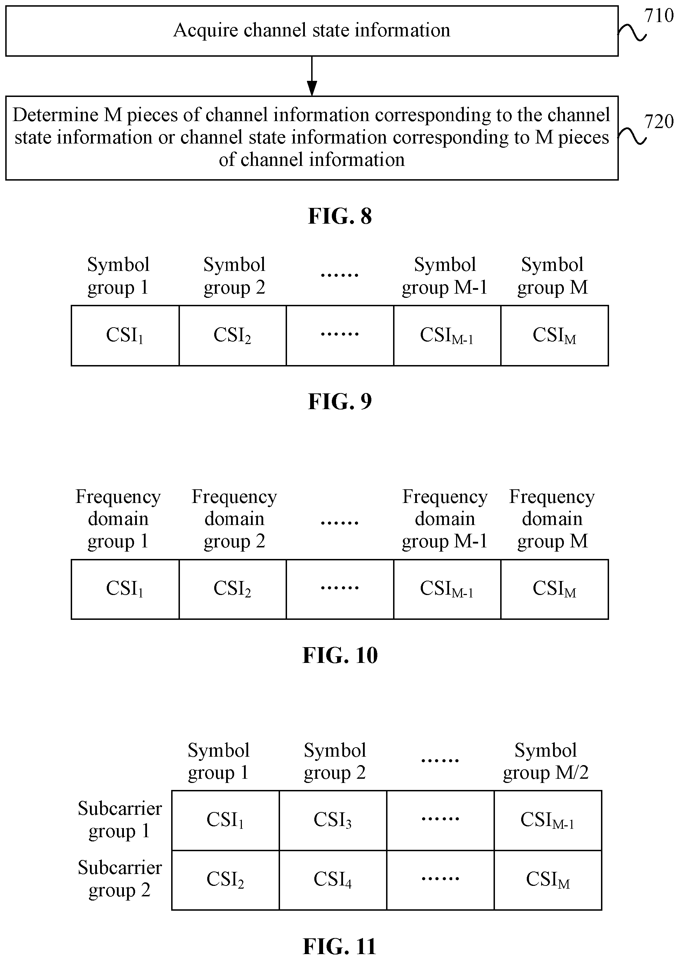

FIG. 8 is a flowchart of a method for determining channel state information according to an embodiment of the present application. This embodiment of the present application may be applicable for determining channel state information. The channel information corresponding to the channel state information is determined based on historical channel information or channel information earlier than the reference slot. The method may be performed by the apparatus for determining channel state information according to any embodiment of the present application. The apparatus may be implemented by software and/or hardware. The apparatus is generally integrated in a base station. Referring to FIG. 8, the method of this embodiment of the present application includes 710 and 720.

In 710, channel state information is acquired.

For example, the channel state information may be acquired by receiving one or more CSI reports, where the channel state information is acquired from processing M pieces of channel information.

In 720, M pieces of channel information corresponding to the channel state information or channel state information corresponding to M pieces of channel information are determined, where the M pieces of channel information are determined by N pieces of channel information, N is an integer greater than 1, and M is an integer greater than or equal to 1.

In this embodiment of the present application, M pieces of channel information or M pieces of channel state information may be determined according to the received channel state information. Here the M pieces of channel information may be determined by N pieces of channel information. In an example embodiment, the channel state information is fed back based on K pieces of second-type precoding information, and the corresponding channel information may be determined based on the ith piece of second-type precoding information. In another example embodiment, the channel state information is fed back based on first-type precoding information; and the M pieces of channel state information may be determined based on the channel state information. For example, the ith piece of channel state information may be determined based on the ith piece of first-type precoding information. i is a positive integer less than or equal to M.

In some embodiments, the N pieces of channel information are channel information earlier than a reference slot, and the M pieces of channel information are channel information later than the reference slot.

In some embodiments, there are K pieces of channel state information and, the K pieces of channel state information are acquired from processing of M pieces of channel information. Here M is a positive integer, and K is a positive integer less than or equal to M.

In some embodiments, processing the M pieces of channel information into the K pieces of channel state information includes classifying the M pieces of channel information into K channel information groups according to the respective slots corresponding to the M pieces of channel information; and processing the K channel information groups into K pieces of second-type precoding information, wherein K and M are each an integer greater than or equal to 1, and K is less than or equal to M.

In some embodiments, processing the M pieces of channel information into the K pieces of channel state information includes encoding the M pieces of channel information in the order of slots corresponding to the M pieces of channel information and processing the encoded M pieces of channel information into one piece of channel state information.

In some embodiments, processing the M pieces of channel information into the K pieces of channel state information includes processing the M pieces of channel information into M pieces of channel state information, wherein a piece of channel information corresponds to a piece of channel state information.

In some embodiments, processing the M pieces of channel information into the K pieces of channel state information includes mapping the K pieces of channel state information in the order of priority values of the K pieces of channel state information to uplink transmission resources corresponding to a channel state information report.

In some embodiments, the priority values of the K pieces of channel state information are determined according to slots corresponding to the K pieces of channel state information, or the priority values of the K pieces of channel state information are determined according to indexes corresponding to the K pieces of channel state information.

In some embodiments, mapping the K pieces of channel state information in the order of priority values of the K pieces of channel state information to the uplink transmission resources corresponding to the channel state information report includes one of the following: dividing the uplink transmission resources into K time-domain resource groups and mapping the kth piece of channel state information among the K pieces of channel state information to the kth time-domain resource group among the K time-domain resource groups; dividing the uplink transmission resources into K frequency-domain resource groups and mapping a kth piece of channel state information among the K pieces of channel state information to a kth frequency-domain resource group among the K frequency-domain resource groups; or dividing the uplink transmission resources into K time-frequency-domain resource groups and mapping a kth piece of channel state information among the K pieces of channel state information to a kth time-frequency-domain resource group among the K time-frequency-domain resource groups.

Here k = 1, ..., K, where "..." are positive integers less than or equal to K.

In some embodiments, the ith channel information group among the K channel information groups includes Xᵢ pieces of channel information. Here Xᵢ is a positive integer, and i = 1, ..., K.

In this embodiment of the present application, among the K channel information groups, each channel information group includes at least one piece of channel information. In an embodiment, in terms of the number of pieces of channel information included in each channel information group, one of the following applies: The first channel information group includes X1 pieces of channel information, and the second channel information group includes X2 pieces of channel information, where X1 and X2 are each a positive integer; the first channel information group includes X1 pieces of channel information, the second channel information group includes X2 pieces of channel information, and the third channel information group includes X3 pieces of channel information, where X1, X2, and X3 are each a positive integer; or the first channel information group includes X1 pieces of channel information, the second channel information group includes X2 pieces of channel information, the third channel information group includes X3 pieces of channel information, and the fourth channel information group includes X4 pieces of channel information, where X1, X2, X3, and X4 are each a positive integer.

In some embodiments, the first channel information group includes 1 piece of channel information, and the second channel information group includes 2 pieces of channel information; the first channel information group includes 2 pieces of channel information, and the second channel information group includes 1 piece of channel information; the first channel information group includes 2 pieces of channel information, and the second channel information group includes 2 pieces of channel information; the first channel information group includes 1 piece of channel information, and the second channel information group includes 3 pieces of channel information; the first channel information group includes 3 pieces of channel information, and the second channel information group includes 1 piece of channel information; the first channel information group includes 2 pieces of channel information, and the second channel information group includes 3 pieces of channel information; the first channel information group includes 3 pieces of channel information, and the second channel information group includes 2 pieces of channel information; the first channel information group includes 3 pieces of channel information, and the second channel information group includes 3 pieces of channel information; the first channel information group includes 1 piece of channel information, and the second channel information group includes 4 pieces of channel information; the first channel information group includes 4 pieces of channel information, and the second channel information group includes 1 piece of channel information; the first channel information group includes 2 pieces of channel information, and the second channel information group includes 4 pieces of channel information; the first channel information group includes 4 pieces of channel information, and the second channel information group includes 2 pieces of channel information; the first channel information group includes 3 pieces of channel information, and the second channel information group includes 4 pieces of channel information; the first channel information group includes 4 pieces of channel information, and the second channel information group includes 3 pieces of channel information; the first channel information group includes 4 pieces of channel information, and the second channel information group includes 4 pieces of channel information; the first channel information group includes 1 piece of channel information, the second channel information group includes 2 pieces of channel information, and the third channel information group includes 2 pieces of channel information; or the first channel information group includes 2 pieces of channel information, the second channel information group includes 2 pieces of channel information, and the third channel information group includes 1 piece of channel information.

In some embodiments, in the case where the channel information group includes only one piece of channel information and the first indication information has a first value, the one piece of channel information is processed into first-type precoding information; or in the case where the channel information group includes at least two pieces of channel information and the first indication information has a first value, the at least two pieces of channel information are processed into at least one piece of first-type precoding information.

In some embodiments, acquiring the channel state information includes acquiring the channel state information of the K pieces of channel information transmitted in transmission resources corresponding to a channel state information report, and acquiring channel state information feedback from the .

In some other embodiments, receiving first indication information is also included. The first indication information is configured to indicate the type of the channel state information.

In some embodiments, the channel state information for the K pieces of channel information transmitted on transmission resources corresponding to K channel state information reports is acquired.

In some other embodiments, the channel state information report includes first indication information. The first indication information is configured to indicate the channel state information type of the channel state information corresponding to the channel information group.

In some embodiments, acquiring the channel state information includes acquiring the fed-back channel state information from K channel state information reports.

In some embodiments, the K channel state information reports have the same report identifier information.

In some embodiments, the K channel state information reports have different report identifier information.

In some embodiments, the K channel state information reports are in one slot.

In some embodiments, the K channel state information reports are in K slots.

In some embodiments, the smaller the slot corresponding to the channel information, the smaller the slot corresponding to the transmission resource for the channel state information corresponding to the channel information.

In some embodiments, the smaller the slot corresponding to the channel information, the smaller the slot corresponding to the transmission resource for the channel information.

In some embodiments, the smaller the slot corresponding to the channel information, the smaller the slot corresponding to the channel state information report corresponding to the channel information.

In some embodiments, the smaller the slot corresponding to the channel state information, the smaller the slot corresponding to the channel state information report corresponding to the channel state information.

In some embodiments, the smaller the slot corresponding to the channel state information, the smaller the slot corresponding to the transmission resource for the channel state information.

In some embodiments, a first determination time of the channel state information corresponding to the M pieces of channel information is earlier than a second determination time of channel state information corresponding to the N pieces of channel information.

In an example embodiment, the pieces of channel information are jointly processed into a single piece of CSI and fed back in one channel state information report. Determining the channel state information corresponding to the M pieces of channel information refers to jointly processing the M pieces of channel information into a single piece of channel state information (CSI). Assuming that the M pieces of channel information H₁, H₂, ..., H_{M} are the channel information for slots n₁, ..., n_{M}, respectively, they are a channel matrix related to the number of transmitting and receiving antennas and the bandwidth, where n₁, ..., n_{M} are positive integers sorted in ascending order, then the M pieces of channel information are encoded in the order of slots corresponding to the M pieces of channel information, mapped to one piece of CSI, and fed back in one channel state information report.

In another example embodiment, the M pieces of channel information are processed into M pieces of CSI and are fed back in one channel state information report. Determining the channel state information corresponding to the M pieces of channel information means processing the M pieces of channel information into M pieces of CSI. Assuming that the M pieces of channel information H₁, H₂, ..., H_{M} are the channel information for slots n₁, ..., n_{M}, respectively, they are a channel matrix related to the number of transmitting and receiving antennas and the bandwidth, where n₁, ..., n_{M} are positive integers sorted in ascending order, then the ith group of channel information is mapped to the ith CSIᵢ.

In an embodiment, the priority value of the ith piece of CSI is smaller than that of the jth CSIⱼ, where 1 ≤ i < j ≤ M. During encoding, the pieces of CSI are encoded in ascending order of priority value, starting with the first piece of CSI, followed by the second piece of CSI, and so on, until the uplink transmission resources indicated by the CSI report no longer satisfy the encoding requirements.

In an embodiment, CSI encoding can be mapped to uplink transmission resources. The uplink transmission resources may include time-domain resources, frequency-domain resources, and time-frequency-domain resources. Referring to FIG. 9, CSI₁, CSI₂, ..., and CSI_{M} are encoded sequentially in the time domain. Referring to FIG. 10, CSI₁, CSI₂, ..., and CSI_{M} are encoded sequentially in the frequency domain. Referring to FIG. 11, CSI₁, CSI₂, ..., and CSI_{M} are encoded sequentially in the frequency domain and then the time domain, and the M pieces of encoded CSI are transmitted on uplink transmission resources corresponding to a single CSI report.

In an example embodiment, the channel information can be processed into K pieces of CSI, that is, some CSI corresponds to a single piece of channel information while some CSI corresponds to at least two pieces of channel information and is fed back in a single channel state information report. Determining the channel state information corresponding to the M pieces of channel information means mapping the M pieces of channel information to K pieces of CSI. Assuming that the M pieces of channel information H₁, H₂, ..., H_{M} are the channel information for slots n₁, ..., n_{M}, respectively, they are a channel matrix related to the number of transmitting and receiving antennas and the bandwidth, where n₁, ..., n_{M} are positive integers sorted in ascending order, then the M pieces of channel information are classified into K channel information groups according to the respective slots corresponding to the M pieces of channel information, where each channel information group includes at least one piece of channel information, and the ith group of channel information is mapped to the ith CSIᵢ, where i = 1, ..., K.

In some embodiments, the priority value of the ith piece of CSI is smaller than that of the jth CSIⱼ, where 1 ≤ i < j ≤ M. During encoding, the pieces of CSI are encoded in ascending order of priority value, starting with the first piece of CSI, followed by the second piece of CSI, and so on, until the transmission resources indicated by the CSI report no longer satisfy the encoding requirements.

In an example, CSI₁, CSI₂, ..., and CSIₖ are encoded sequentially in the time domain.

In an example, CSI₁, CSI₂, ..., and CSIₖ are encoded sequentially in the frequency domain.

In an example, CSI₁, CSI₂, ..., and CSIₖ are encoded sequentially in the frequency domain and then the time domain, and the K pieces of encoded CSI are transmitted in a single CSI report.

In some embodiments, the ith channel information group among the K channel information groups includes Xᵢ pieces of channel information. Here Xᵢ is a positive integer, and i = 1, ..., K. In an embodiment, in terms of the number of pieces of channel information included in each channel information group, one of the following applies: The first channel information group includes X1 pieces of channel information, and the second channel information group includes X2 pieces of channel information, where X1 and X2 are each a positive integer; the first channel information group includes X1 pieces of channel information, the second channel information group includes X2 pieces of channel information, and the third channel information group includes X3 pieces of channel information, where X1, X2, and X3 are each a positive integer; or the first channel information group includes X1 pieces of channel information, the second channel information group includes X2 pieces of channel information, the third channel information group includes X3 pieces of channel information, and the fourth channel information group includes X4 pieces of channel information, where X1, X2, X3, and X4 are each a positive integer.

In an embodiment, the K groups of channel information are divided into two or more channel information groups, and in terms of the number of pieces of channel information included in each channel information group, one of the following applies: The first channel information group includes 1 piece of channel information, and the second channel information group includes 2 pieces of channel information; the first channel information group includes 2 pieces of channel information, and the second channel information group includes 2 pieces of channel information; the first channel information group includes 2 pieces of channel information, and the second channel information group includes 2 pieces of channel information; the first channel information group includes 1 piece of channel information, and the second channel information group includes 3 pieces of channel information; the first channel information group includes 3 pieces of channel information, and the second channel information group includes 1 piece of channel information; the first channel information group includes 2 pieces of channel information, and the second channel information group includes 3 pieces of channel information; the first channel information group includes 3 pieces of channel information, and the second channel information group includes 2 pieces of channel information; the first channel information group includes 3 pieces of channel information, and the second channel information group includes 3 pieces of channel information; the first channel information group includes 1 piece of channel information, and the second channel information group includes 4 pieces of channel information; the first channel information group includes 4 pieces of channel information, and the second channel information group includes 1 piece of channel information; the first channel information group includes 2 pieces of channel information, and the second channel information group includes 4 pieces of channel information; the first channel information group includes 4 pieces of channel information, and the second channel information group includes 2 pieces of channel information; the first channel information group includes 3 pieces of channel information, and the second channel information group includes 4 pieces of channel information; the first channel information group includes 4 pieces of channel information, and the second channel information group includes 3 pieces of channel information; the first channel information group includes 4 pieces of channel information, and the second channel information group includes 4 pieces of channel information; the first channel information group includes 1 piece of channel information, the second channel information group includes 2 pieces of channel information, and the third channel information group includes 2 pieces of channel information; or the first channel information group includes 2 pieces of channel information, the second channel information group includes 2 pieces of channel information, and the third channel information group includes 1 piece of channel information.

When the channel state information for each channel information group is determined, for example, the first CSI is processed individually, or one piece of CSI is compressed individually.

In the process of processing channel information H to CSI, if the performance of processing the channel information into the CSI is not satisfactory, that is, the CSI cannot match the channel information or is not much correlated to the channel information, for example, when the first indication information has the first value, the terminal and/or the base station uses the first-type precoding information to describe the channel information in the channel information group, for example, the channel information in the channel information group is determined as the first-type precoding information; and when the first indication information has the second value, the terminal and/or the base station uses the second-type precoding information to describe the channel information in the channel information group, for example, the channel information in the channel information group is determined as the second-type precoding information. Here the first value is 0, and the second value is 1; or the first value is 0, and the second value is a non-zero value; or the first value is FALSE, and the second value is TRUE. Of course, the first value and the second value can also have other real values as long as they can distinguish between two cases. Preferably, only when the H group includes one H, can the channel information be described using a DFT-related codebook method, such as TypeII or eTypeII. If the first indication information has the first value, at least two pieces of channel information in the channel information group can be processed into the first-type precoding information, and each piece of channel information can be described using a DFT-related codebook method, such as TypeII or eTypeII.

In an embodiment, based on the previous embodiments of the present application, also included is feeding back first indication information. The first indication information is configured to indicate the type of the channel state information.

In an example embodiment, for M pieces of channel information, M pieces of CSI are acquired, and M channel state information reports are used for feedback. Determining the channel state information corresponding to the M pieces of channel information means mapping the M pieces of channel information to M pieces of CSI. Assuming that the M pieces of channel information H₁, H₂, ..., H_{M} are the channel information for slots n₁, ..., n_{M}, respectively, they are a channel matrix related to the number of transmitting and receiving antennas and the bandwidth, where n₁, ..., n_{M} are positive integers sorted in ascending order, then the ith group of channel information is mapped to the ith CSIᵢ, where i = 1, ..., K, and the ith CSI report is used to feed back the kth piece of CSI.

In an embodiment, the M reports have the same reportID, and the M reports are in a single slot. In this case, the M pieces of CSI are fed back in the order of the indexes corresponding to the frequency domain groups. For example, the ith frequency domain group is used for carrying the CSI corresponding to the ith CSI report.

In another embodiment, the M reports have the same reportID, and the M reports are in M slots. In this case, the M pieces of CSI are fed back in the order of the indexes of the slots. For example, the ith slot is used for carrying the CSI corresponding to the ith CSI report.

In another embodiment, the M reports have different reportIDs, and the M reports are in M slots. In this case, the M pieces of CSI are fed back in the order of the indexes of the slots according to the sizes of the reportIDs. For example, the ith slot is used for carrying the CSI corresponding to the CSI report having the ith largest report ID.

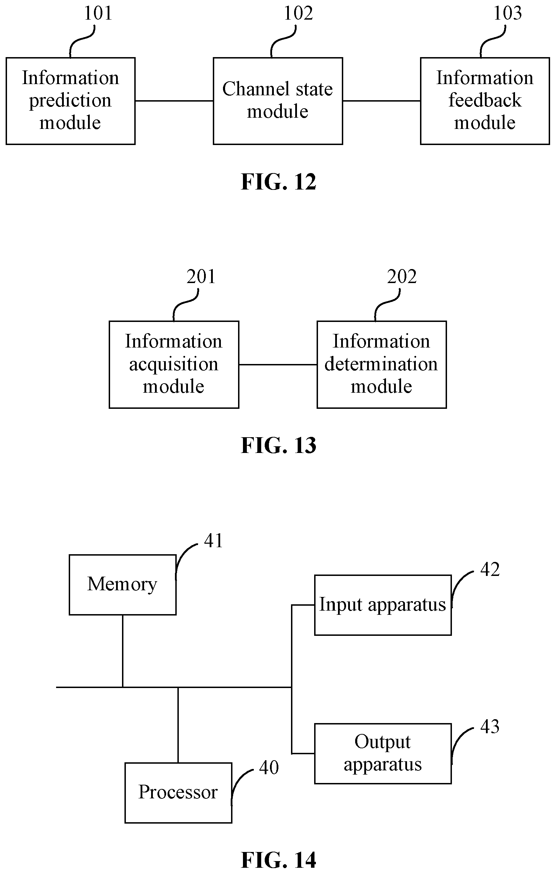

FIG. 12 is a diagram illustrating the structure of an apparatus for determining channel state information according to an embodiment of the present application. The apparatus for determining channel state information can perform the method for determining channel state information according to any embodiment of the present application and has corresponding function modules and beneficial effects of the performed method. The apparatus may be implemented by software and/or hardware. The apparatus is generally integrated in a terminal. The apparatus includes an information prediction module 101, a channel state module 102, and an information feedback module 103.

The information prediction module 101 is configured to acquire M pieces of channel information according to N pieces of channel information.

The channel state module 102 is configured to determine channel state information corresponding to the M pieces of channel information.

The information feedback module 103 is configured to feed back the channel state information corresponding to the M pieces of channel information. Here N is an integer greater than 1, and M is an integer greater than or equal to 1.

In some embodiments, the N pieces of channel information in the apparatus are channel information earlier than a reference slot, and the M pieces of channel information are channel information later than the reference slot.

In some embodiments, the channel state module 102 of the apparatus includes a processing unit configured to process the M pieces of channel information into K pieces of channel state information. Here M is a positive integer, and K is a positive integer less than or equal to M.

In some embodiments, the processing unit is configured to classify the M pieces of channel information into K channel information groups according to the respective slots corresponding to the M pieces of channel information; and process the K channel information groups into K pieces of second-type precoding information. Here K and M are each an integer greater than or equal to 1, and K is less than or equal to M.

In some other embodiments, the processing unit is configured to encode the M pieces of channel information in the order of slots corresponding to the M pieces of channel information and process the encoded M pieces of channel information into one piece of channel state information.

In some other embodiments, the processing unit is configured to process the M pieces of channel information into M pieces of channel state information. Here a piece of channel information corresponds to a piece of channel state information.

In some other embodiments, the processing unit is configured to map the K pieces of channel state information in the order of priority values of the K pieces of channel state information to uplink transmission resources corresponding to a channel state information report.

In some other embodiments, the priority values of the K pieces of channel state information are determined according to slots corresponding to the K pieces of channel state information, or the priority values of the K pieces of channel state information are determined according to indexes corresponding to the K pieces of channel state information.

In some other embodiments, mapping the K pieces of channel state information in the order of priority values of the K pieces of channel state information to the uplink transmission resources corresponding to the channel state information report includes one of the following:

dividing the uplink transmission resources into K time-domain resource groups and mapping the kth piece of channel state information among the K pieces of channel state information to the kth time-domain resource group among the K time-domain resource groups;

dividing the uplink transmission resources into K frequency-domain resource groups and mapping the kth piece of channel state information among the K pieces of channel state information to the kth frequency-domain resource group among the K frequency-domain resource groups; or dividing the uplink transmission resources into K time-frequency-domain resource groups and mapping the kth piece of channel state information among the K pieces of channel state information to the kth time-frequency-domain resource group among the K time-frequency-domain resource groups.

In some embodiments, the ith channel information group among the K channel information groups includes Xᵢ pieces of channel information. Here Xᵢ is a positive integer, and i = 1, ..., K.

In this embodiment of the present application, among the K channel information groups, each channel information group includes at least one piece of channel information. In an embodiment, in terms of the number of pieces of channel information included in each channel information group, one of the following applies: The first channel information group includes X1 pieces of channel information, and the second channel information group includes X2 pieces of channel information, where X1 and X2 are each a positive integer; the first channel information group includes X1 pieces of channel information, the second channel information group includes X2 pieces of channel information, and the third channel information group includes X3 pieces of channel information, where X1, X2, and X3 are each a positive integer; or the first channel information group includes X1 pieces of channel information, the second channel information group includes X2 pieces of channel information, the third channel information group includes X3 pieces of channel information, and the fourth channel information group includes X4 pieces of channel information, where X1, X2, X3, and X4 are each a positive integer.

In an embodiment, in the apparatus, one of the following applies: The first channel information group includes 1 piece of channel information, and the second channel information group includes 2 pieces of channel information; the first channel information group includes 2 pieces of channel information, and the second channel information group includes 1 piece of channel information; the first channel information group includes 2 pieces of channel information, and the second channel information group includes 2 pieces of channel information; the first channel information group includes 1 piece of channel information, and the second channel information group includes 3 pieces of channel information; the first channel information group includes 3 pieces of channel information, and the second channel information group includes 1 piece of channel information; the first channel information group includes 2 pieces of channel information, and the second channel information group includes 3 pieces of channel information; the first channel information group includes 3 pieces of channel information, and the second channel information group includes 2 pieces of channel information; the first channel information group includes 3 pieces of channel information, and the second channel information group includes 3 pieces of channel information; the first channel information group includes 1 piece of channel information, and the second channel information group includes 4 pieces of channel information; the first channel information group includes 4 pieces of channel information, and the second channel information group includes 1 piece of channel information; the first channel information group includes 2 pieces of channel information, and the second channel information group includes 4 pieces of channel information; the first channel information group includes 4 pieces of channel information, and the second channel information group includes 2 pieces of channel information; the first channel information group includes 3 pieces of channel information, and the second channel information group includes 4 pieces of channel information; the first channel information group includes 4 pieces of channel information, and the second channel information group includes 3 pieces of channel information; the first channel information group includes 4 pieces of channel information, and the second channel information group includes 4 pieces of channel information; the first channel information group includes 1 piece of channel information, the second channel information group includes 2 pieces of channel information, and the third channel information group includes 2 pieces of channel information; or the first channel information group includes 2 pieces of channel information, the second channel information group includes 2 pieces of channel information, and the third channel information group includes 1 piece of channel information.

In some other embodiments, in the apparatus, one of the following applies: In the case where the channel information group includes only one piece of channel information and the first indication information has a first value, the one piece of channel information is processed into first-type precoding information; or in the case where the channel information group includes at least two pieces of channel information and the first indication information has a first value, the at least two pieces of channel information are processed into at least one piece of first-type precoding information.

In some other embodiments, the apparatus also includes a module configured to feedback first indication information. The first indication information is configured to indicate the type of the channel state information.

In some other embodiments, the information feedback module 103 is configured to transmit the channel state information for the K pieces of channel information on transmission resources corresponding to a channel state information report.

In some other embodiments, the channel state information report in the apparatus includes first indication information. The first indication information is configured to indicate the channel state information type of the channel state information corresponding to the channel information group.

In some other embodiments, the information feedback module 103 is configured to transmit the channel state information for the K pieces of channel information on transmission resources corresponding to K channel state information reports.

In some embodiments, the K channel state information reports have the same report identifier information.

In some embodiments, the K channel state information reports have different report identifier information.

In some embodiments, the K channel state information reports are in one slot.

In some embodiments, the K channel state information reports are in K slots.

In some embodiments, the smaller the slot corresponding to the channel information, the smaller the slot corresponding to the transmission resource for the channel state information corresponding to the channel information.

In some embodiments, the smaller the slot corresponding to the channel information, the smaller the slot corresponding to the transmission resource for the channel information.

In some embodiments, the smaller the slot corresponding to the channel information, the smaller the slot corresponding to the channel state information report corresponding to the channel information.

In some embodiments, the smaller the slot corresponding to the channel state information, the smaller the slot corresponding to the channel state information report corresponding to the channel state information.

In some embodiments, the smaller the slot corresponding to the channel state information, the smaller the slot corresponding to the transmission resource for the channel state information.

In some embodiments, a first determination time of the channel state information corresponding to the M pieces of channel information is earlier than a second determination time of channel state information corresponding to the N pieces of channel information.

FIG. 13 is a diagram illustrating the structure of an apparatus for determining channel state information according to an embodiment of the present application. The apparatus for determining channel state information can perform the method for determining channel state information according to any embodiment of the present application and has corresponding function modules and beneficial effects of the performed method. The apparatus may be implemented by software and/or hardware. The apparatus is generally integrated in a base station. The apparatus includes an information acquisition module 201 and an information determination module 202.

The information acquisition module 201 is configured to acquire channel state information.

The information determination module 202 is configured to determine M pieces of channel information corresponding to the channel state information or determine channel state information corresponding to M pieces of channel information. Here the M pieces of channel information are determined by N pieces of channel information, N is an integer greater than 1, and M is an integer greater than or equal to 1.

In some embodiments, the N pieces of channel information are channel information earlier than a reference slot, and the M pieces of channel information are channel information later than the reference slot.

In some embodiments, there are K pieces of channel state information and, the K pieces of channel state information are acquired from processing of M pieces of channel information. Here M is a positive integer, and K is a positive integer less than or equal to M.

In some embodiments, processing the M pieces of channel information into the K pieces of channel state information includes classifying the M pieces of channel information into K channel information groups according to the respective slots corresponding to the M pieces of channel information; and processing the K channel information groups into K pieces of second-type precoding information. Here K and M are each an integer greater than or equal to 1, and K is less than or equal to M.

In some embodiments, processing the M pieces of channel information into the K pieces of channel state information includes encoding the M pieces of channel information in the order of slots corresponding to the M pieces of channel information and processing the encoded M pieces of channel information into one piece of channel state information.

In some embodiments, processing the M pieces of channel information into the K pieces of channel state information includes processing the M pieces of channel information into M pieces of channel state information. Here a piece of channel information among the M pieces of channel information corresponds to a piece of channel state information among the K pieces of channel state information.

In some embodiments, processing the M pieces of channel information into the K pieces of channel state information includes mapping the K pieces of channel state information in the order of priority values of the K pieces of channel state information to uplink transmission resources corresponding to a channel state information report.

In some embodiments, the priority values of the K pieces of channel state information are determined according to slots corresponding to the K pieces of channel state information, or the priority values of the K pieces of channel state information are determined according to indexes corresponding to the K pieces of channel state information.

In some embodiments, mapping the K pieces of channel state information in the order of priority values of the K pieces of channel state information to the uplink transmission resources corresponding to the channel state information report includes one of the following: dividing the uplink transmission resources into K time-domain resource groups and mapping the kth piece of channel state information among the K pieces of channel state information to the kth time-domain resource group among the K time-domain resource groups; dividing the uplink transmission resources into K frequency-domain resource groups and mapping the kth piece of channel state information among the K pieces of channel state information to the kth frequency-domain resource group among the K frequency-domain resource groups; or dividing the uplink transmission resources into K time-frequency-domain resource groups and mapping the kth piece of channel state information among the K pieces of channel state information to the kth time-frequency-domain resource group among the K time-frequency-domain resource groups.

In some embodiments, the ith channel information group among the K channel information groups includes Xᵢ pieces of channel information. Here Xᵢ is a positive integer, and i = 1, ..., K.

In this embodiment of the present application, among the K channel information groups, each channel information group includes at least one piece of channel information. In an embodiment, in terms of the number of pieces of channel information included in each channel information group, one of the following applies: The first channel information group includes X1 pieces of channel information, and the second channel information group includes X2 pieces of channel information, where X1 and X2 are each a positive integer; the first channel information group includes X1 pieces of channel information, the second channel information group includes X2 pieces of channel information, and the third channel information group includes X3 pieces of channel information, where X1, X2, and X3 are each a positive integer; or the first channel information group includes X1 pieces of channel information, the second channel information group includes X2 pieces of channel information, the third channel information group includes X3 pieces of channel information, and the fourth channel information group includes X4 pieces of channel information, where X1, X2, X3, and X4 are each a positive integer.

In some embodiments, the first channel information group includes 1 piece of channel information, and the second channel information group includes 2 pieces of channel information; the first channel information group includes 2 pieces of channel information, and the second channel information group includes 1 piece of channel information; the first channel information group includes 2 pieces of channel information, and the second channel information group includes 2 pieces of channel information; the first channel information group includes 1 piece of channel information, and the second channel information group includes 3 pieces of channel information; the first channel information group includes 3 pieces of channel information, and the second channel information group includes 1 piece of channel information; the first channel information group includes 2 pieces of channel information, and the second channel information group includes 3 pieces of channel information; the first channel information group includes 3 pieces of channel information, and the second channel information group includes 2 pieces of channel information; the first channel information group includes 3 pieces of channel information, and the second channel information group includes 3 pieces of channel information; the first channel information group includes 1 piece of channel information, and the second channel information group includes 4 pieces of channel information; the first channel information group includes 4 pieces of channel information, and the second channel information group includes 1 piece of channel information; the first channel information group includes 2 pieces of channel information, and the second channel information group includes 4 pieces of channel information; the first channel information group includes 4 pieces of channel information, and the second channel information group includes 2 pieces of channel information; the first channel information group includes 3 pieces of channel information, and the second channel information group includes 4 pieces of channel information; the first channel information group includes 4 pieces of channel information, and the second channel information group includes 3 pieces of channel information; the first channel information group includes 4 pieces of channel information, and the second channel information group includes 4 pieces of channel information; the first channel information group includes 1 piece of channel information, the second channel information group includes 2 pieces of channel information, and the third channel information group includes 2 pieces of channel information; or the first channel information group includes 2 pieces of channel information, the second channel information group includes 2 pieces of channel information, and the third channel information group includes 1 piece of channel information.

In some embodiments, in the case where the channel information group includes only one piece of channel information and the first indication information has a first value, the one piece of channel information is processed into first-type precoding information; or in the case where the channel information group includes at least two pieces of channel information and the first indication information has a first value, the at least two pieces of channel information are processed into at least one piece of first-type precoding information.

In some other embodiments, the apparatus further includes a module configured to receive first indication information. The first indication information is configured to indicate the type of the channel state information.

In some embodiments, the information acquisition module 201 is configured to acquire the channel state information by acquiring the channel state information for the K pieces of channel information on transmission resources corresponding to a channel state information report.

In some embodiments, the channel state information report includes first indication information. The first indication information is configured to indicate the type of the channel state information.

In some embodiments, the information acquisition module 201 is configured to acquire the channel state information by acquiring the channel state information for the K pieces of channel information on transmission resources corresponding to K channel state information reports.

In some embodiments, the K channel state information reports have the same report identifier information.

In some embodiments, the K channel state information reports have different report identifier information.

In some embodiments, the K channel state information reports are in one slot.

In some embodiments, the K channel state information reports are in K slots.

In some embodiments, the smaller the slot corresponding to the channel information, the smaller the slot corresponding to the transmission resource for the channel state information corresponding to the channel information.

In some embodiments, the smaller the slot corresponding to the channel information, the smaller the slot corresponding to the transmission resource for the channel information.

In some embodiments, the smaller the slot corresponding to the channel information, the smaller the slot corresponding to the channel state information report corresponding to the channel information.

In some embodiments, the smaller the slot corresponding to the channel state information, the smaller the slot corresponding to the channel state information report corresponding to the channel state information.

In some embodiments, the smaller the slot corresponding to the channel state information, the smaller the slot corresponding to the transmission resource for the channel state information.

In some embodiments, a first determination time of the channel state information corresponding to the M pieces of channel information is earlier than a second determination time of channel state information corresponding to the N pieces of channel information.

FIG. 14 is a structural diagram of an electronic device according to an embodiment of the present application. The electronic device includes a processor 40, a memory 41, an input apparatus 42, and an output apparatus 43. One or more processors 40 may be included in the electronic device. FIG. 14 uses one processor 40 as an example. The processor 40, the memory 41, the input apparatus 42, and the output apparatus 43 in the electronic device may be connected via a bus or in other manners. FIG. 14 uses connection via a bus as an example.

As a computer-readable storage medium, the memory 41 may be configured to store software programs, computer-executable programs, and modules, for example, modules (the information prediction module 101, the channel state module 102, and the information feedback module 103; or the information acquisition module 201 and the information determination module 202) corresponding to the apparatus for determining channel state information according to any embodiment of the present application. The processor 40 executes software programs, instructions, and modules stored in the memory 41 to perform function applications and data processing of the electronic device, that is, to perform the preceding method.

The memory 41 may mainly include a program storage region and a data storage region, where the program storage region may store an operating system and an application program required by at least one function, and the data storage region may store data created according to use of the electronic device. Additionally, the memory 41 may include a high-speed random-access memory or a nonvolatile memory such as at least one disk memory, a flash memory or another nonvolatile solid-state memory. In some examples, the memory 41 may further include memories that are remotely disposed relative to the processor 40. These remote memories may be connected to the electronic device via a network. Examples of the preceding network include, but are not limited to, the Internet, an intranet, a local area network, a mobile communication network, and a combination thereof.

The input apparatus 42 may be configured to receive inputted digital or character information and generate key signal input related to user settings and function control of the electronic device. The output apparatus 43 may include a display device such as a display screen.

An embodiment of the present application provides a storage medium including computer-executable instructions. When executed by a computer processor, the computer-executable instructions are configured to cause the computer processor to perform a method for determining channel state information.

The method includes acquiring M pieces of channel information according to N pieces of channel information; determining channel state information corresponding to the M pieces of channel information; and feeding back the channel state information corresponding to the M pieces of channel information. Here N is an integer greater than 1, and M is an integer greater than or equal to 1.

Alternatively, the method includes acquiring channel state information; and determining M pieces of channel information corresponding to the channel state information or determining channel state information corresponding to M pieces of channel information. Here the M pieces of channel information are determined according to N pieces of channel information, N is an integer greater than 1, and M is an integer greater than or equal to 1.

From the preceding description of embodiments, it is apparent to those skilled in the art that the present application may be implemented by use of software and necessary general-purpose hardware, or may be certainly implemented by hardware, but the former is a preferred implementation in many cases. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk or an optical disc of a computer and includes several instructions for causing a computer device (which may be a personal computer, a server, or a network device) to perform the method in the embodiments of the present application.

It is to be noted that units and modules that are included in the preceding embodiment of the apparatus are divided according to functional logic, and the division is not limited to this as long as the corresponding functions can be performed. Additionally, the specific names of function units are merely intended for distinguishing between each other and are not to limit the scope of the present application.

It is to be understood by those of ordinary skill in the art that some or all operations of the preceding disclosed method and function modules/units in the preceding system or device may be implemented as software, firmware, hardware and suitable combinations thereof.

In the hardware implementation, the division of the preceding function modules/units may not correspond to the division of physical components. For example, one physical component may have multiple functions, or one function or operation may be performed jointly by several physical components. Some or all physical components may be implemented as software executed by a processor such as a central processing unit, a digital signal processor or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules or other data). The computer storage media include, but are not limited to, a RAM, a ROM, an electrically erasable programmable read-only memory (EEPROM), a flash memory, or other memory technologies, a compact disc read-only memory (CD-ROM), a digital versatile disc (DVD) or other optical disc memories, magnetic cassettes, magnetic tapes, magnetic disk memories or other magnetic storage apparatuses, or any other medium used for storing the desired information and accessible by a computer. Additionally, as is known to those having ordinary skill in the art, the communication media generally include computer-readable instructions, data structures, program modules or other data in carriers or in modulated data signals transported in other transport mechanisms and may include any information delivery medium.

The preceding preferred embodiments of the present application are described with reference to the drawings and are not intended to limit the scope of the embodiments of the present application. Any modifications, equivalent replacements and improvements made by those skilled in the art without departing from the scope and substantive content of the present application should be within the scope of the present application.

## Claims

1. A method for determining channel state information, comprising:
acquiring M pieces of channel information according to N pieces of channel information;
determining channel state information corresponding to the M pieces of channel information; and
feeding back the channel state information corresponding to the M pieces of channel information, wherein N is an integer greater than 1, and M is an integer greater than or equal to 1.

2. The method of claim 1, wherein the N pieces of channel information are channel information earlier than a reference slot, and the M pieces of channel information are channel information later than the reference slot.

3. The method of claim 1, wherein determining the channel state information corresponding to the M pieces of channel information comprises:
processing the M pieces of channel information into K pieces of channel state information, wherein M is a positive integer, and K is a positive integer less than or equal to M.

4. The method of claim 3, wherein processing the M pieces of channel information into the K pieces of channel state information comprises:
classifying the M pieces of channel information into K channel information groups according to respective slots corresponding to the M pieces of channel information; and
processing the K channel information groups into K pieces of second-type precoding information, wherein K and M are each an integer greater than or equal to 1, and K is less than or equal to M.

5. The method of claim 3, wherein processing the M pieces of channel information into the K pieces of channel state information comprises:
encoding the M pieces of channel information in an order of slots corresponding to the M pieces of channel information and processing the encoded M pieces of channel information into one piece of channel state information.

6. The method of claim 3, wherein processing the M pieces of channel information into the K pieces of channel state information comprises:
processing the M pieces of channel information into M pieces of channel state information,
wherein the M pieces of channel information have a one-to-one correspondence with the M pieces of channel state information.

7. The method of claim 3, wherein processing the M pieces of channel information into the K pieces of channel state information comprises:
mapping the K pieces of channel state information in an order of priority values of the K pieces of channel state information to uplink transmission resources corresponding to a channel state information report.

8. The method of claim 7, wherein the priority values of the K pieces of channel state information are determined according to slots corresponding to the K pieces of channel state information, or indexes corresponding to the K pieces of channel state information.

9. The method of claim 7, wherein mapping the K pieces of channel state information in the order of priority values of the K pieces of channel state information to the uplink transmission resources corresponding to the channel state information report comprises one of the following:
dividing the uplink transmission resources into K time-domain resource groups and mapping a kth piece of channel state information among the K pieces of channel state information to a kth time-domain resource group among the K time-domain resource groups, wherein k is a positive integer less than or equal to K;
dividing the uplink transmission resources into K frequency-domain resource groups and mapping a kth piece of channel state information among the K pieces of channel state information to a kth frequency-domain resource group among the K frequency-domain resource groups; or
dividing the uplink transmission resources into K time-frequency-domain resource groups and mapping a kth piece of channel state information among the K pieces of channel state information to a kth time-frequency-domain resource group among the K time-frequency-domain resource groups.

10. The method of claim 4, wherein an ith channel information group among the K channel information groups comprises Xᵢ pieces of channel information, wherein Xᵢ is a positive integer, and i = 1, ..., K.

11. The method of claim 7, further comprising: feeding back the K pieces of channel state information, which comprises:
transmitting the K pieces of channel state information on transmission resources corresponding to a channel state information report.

12. The method of claim 1 or 11, further comprising feeding back first indication information, wherein the first indication information is configured to indicate a channel state information type.

13. The method of claim 3, further comprising: feeding back the K pieces of channel state information comprises:
transmitting the K pieces of channel state information on transmission resources corresponding to K channel state information reports.

14. The method of claim 13, wherein the K channel state information reports have same report identifier information.

15. The method of claim 13, wherein the K channel state information reports have different report identifier information.

16. The method of claim 13, wherein the K channel state information reports are in one slot.

17. The method of claim 13, wherein the K channel state information reports are in K slots.

18. The method of claim 1, wherein one of the following applies:
the smaller a slot corresponding to one channel information among the M pieces of channel information, the smaller a slot corresponding to a transmission resource for channel state information corresponding to the one channel information;
the smaller a slot corresponding to one channel information among the M pieces of channel information, the smaller a slot corresponding to a transmission resource for the one channel information;
the smaller a slot corresponding to one channel information among the M pieces of channel information, the smaller a slot corresponding to a channel state information report corresponding to the one channel information;
the smaller a slot corresponding to the channel state information, the smaller a slot corresponding to a channel state information report corresponding to the channel state information; or
the smaller a slot corresponding to the channel state information, the smaller a slot corresponding to a transmission resource for the channel state information.

19. The method of claim 1, wherein a first determination time of the channel state information corresponding to the M pieces of channel information is earlier than a second determination time of channel state information corresponding to the N pieces of channel information.

20. A method for determining channel state information, comprising:
acquiring channel state information; and
determining M pieces of channel information corresponding to the channel state information or
determining channel state information corresponding to M pieces of channel information, wherein the M pieces of channel information are determined through N pieces of channel information, N is an integer greater than 1, and M is an integer greater than or equal to 1.

21. An electronic device, comprising:
one or more processors; and
a memory configured to store one or more programs which, when executed by the one or more processors, cause the one or more processors to perform the method of any one of claims 1 to 20.

22. A computer-readable storage medium storing a computer program which, when executed by a processor, causes the processor to perform the method of any one of claims 1 to 20.
